(19) Europäisches Patentamt
European Patent Office
Office européen des brevets

(11) **EP 2 427 009 A1**

(12) **EUROPEAN PATENT APPLICATION**
published in accordance with Art. 153(4) EPC

(43) Date of publication:
**07.03.2012 Bulletin 2012/10**

(51) Int Cl.:
***H04W 72/04*** (2009.01)          ***H04W 16/30*** (2009.01)

(21) Application number: **10769803.7**

(22) Date of filing: **28.04.2010**

(86) International application number:
**PCT/JP2010/057619**

(87) International publication number:
**WO 2010/126105 (04.11.2010 Gazette 2010/44)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.04.2009 JP 2009110184**

(71) Applicant: **NTT DOCOMO, INC.**
**Chiyoda-ku**
**Tokyo 100-6150 (JP)**

(72) Inventor: **ISHII, Hiroyuki**
**Tokyo 100-6150 (JP)**

(74) Representative: **HOFFMANN EITLE**
**Patent- und Rechtsanwälte**
**Arabellastraße 4**
**81925 München (DE)**

(54) **MOBILE COMMUNICATION SYSTEM, WIRELESS BASE STATION, AND CONTROL METHOD**

(57)     A radio base station according to the present invention comprising : a mobile communication system having a structure in which a first communication area using a carrier in a first frequency band and a second communication area using a carrier in a second frequency band geologically overlap at least in one part, and including a radio base station which manages the first communication area and the second communication area, the radio base station comprises, a determination unit configured to determine whether to perform carrier aggregation, by which a mobile station transmits an uplink signal using the carrier in the first frequency band and the carrier in the second frequency band, on a basis of at least one of location of the mobile station, a radio quality at the mobile station, a degree of congestion in the first communication area and the second communication area, a number of mobile stations in communication in the first communication area and the second communication area, a type of a data signal transmitted by the mobile station, an amount of data in a transmission buffer at either a radio base station or the mobile station, capability of the mobile station, and a movement speed of the mobile station and a control signal transmission unit configured to transmit a control signal for specifying the carrier in the first frequency band and the carrier in the second frequency band when it is determined to perform the carrier aggregation, and the mobile station comprises, a communication unit configured to transmit an uplink signal or receive a downlink signal using the carrier in the first frequency band and the carrier in the second frequency band according to the control signal transmitted by the radio base station.

FIG. 8

**Description**

**TECHNICAL FIELD**

The present invention relates to a mobile communication system, a radio base station, and a control method.

A communication scheme, which is the next generation of a WCDMA (Wideband Code Division Multiplexing Access) scheme, an HSDPA (High-Speed Downlink Pcket Access) scheme, an HSUPA (High-Speed Uplink Pcket Access) scheme and the like, that is, an LTE (Long Term Evolution) scheme has been discussed in the 3GPP, which is a standardizing group of the WCDMA, and specification is under progress.

As a radio access scheme in the LTE scheme, an OFDMA (Orthogonal Frequency Division Multiplexing Access) scheme has been defined for a downlink, and an SC-FDMA (Single-Carrier Frequency Division Multiplexing Access) scheme has been defined for an uplink.

The OFDMA scheme denotes a multicarrier transmission scheme in which a frequency band is divided into a plurality of narrow frequency bands (subcarriers), and data is loaded on each subcarrier for transmission. According to the OFDMA scheme, subcarriers are densely arranged on the frequency axis while being orthogonal to one another, so that high-rate transmission is achieved, resulting in the improvement of frequency use efficiency.

The SC-FDMA scheme denotes a single carrier transmission scheme in which a frequency band is divided for each terminal, and transmission is performed using different frequency bands among a plurality of terminals. According to the SC-FDMA scheme, since it is possible to easily and efficiently reduce inter-terminal interference and suppress variation in transmission power, the SC-FDMA scheme is preferable in terms of low power consumption of a terminal, expansion of coverage and the like.

In the LTE scheme, communication is performed in which one or more RBs (Resource Blocks) are allocated to a mobile station in both a downlink and an uplink.

A radio base station eNB determines a mobile station, to which a resource block is to be allocated among a plurality of mobile stations, for each subframe (1ms in the LTE scheme) (this process is called "schduling").

In a downlink, the radio base station eNB transmits a shared channel signal to a mobile station, which is selected through the scheduling, by using one or more resource blocks. In an uplink, the mobile station selected through the scheduling transmits a shared channel signal to the radio base station eNB by using one or more resource blocks.

In addition, the shared channel signal is a signal on PUSCH (Physical Uplink Shared Channel) in terms of an uplink, and is a signal on "physical downlink shared channel (PDSCH)" in terms of a downlink.

Furthermore, as a communication scheme which is the next generation of the LTE scheme, an LTE-Advanced scheme has been discussed in the 3GPP.

In the LTE-Advanced scheme, performing "Carrier Aggregation" has been agreed as requirements.

Here, when the "Carrier Aggregation" is performed, a mobile station UE may simultaneously receive downlink signals using a plurality of carriers or simultaneously transmit uplink signals using a plurality of carriers.

**SUMMARY OF THE INVENTION**

**PROBLEMS TO BE SOLVED BY THE INVENTION**

However, since cases in which the "Carrier Aggregation" should be performed have not been discussed in the 3GPP, there is a problem in that it is not possible to maximize the effect obtained by performing the "Carrier Aggregation".

Therefore, the present invention has been achieved in view of the above-described problems, and an object thereof is to provide a mobile communication system capable of maximizing the effect obtained by performing "Carrier Aggregation", a radio base station, and a control method.

**MEANS FOR SOLVING THE PROBLEMS**

The first feature of the present invention is summarized in that a mobile communication system having a structure in which a first communication area using a carrier in a first frequency band and a second communication area using a carrier in a second frequency band geologically overlap at least in one part, and including a radio base station which manages the first communication area and the second communication area, the radio base station comprises, a determination unit configured to determine whether to perform carrier aggregation, by which a mobile station transmits an uplink signal using the carrier in the first frequency band and the carrier in the second frequency band, on a basis of at least one of location of the mobile station, a radio quality at the mobile station, a degree of congestion in the first communication area and the second communication area, a number of mobile stations in communication in the first communication area and the second communication area, a type of a data signal transmitted by the mobile station, an amount of data in a transmission buffer at either a radio base station or the mobile station, capability of the mobile station, and a movement speed of the mobile station and a control signal transmission unit configured to transmit a control signal for specifying the carrier in the first frequency band and the carrier in the second frequency band when it is determined to perform the carrier aggregation, and the mobile station comprises, a communication unit configured to transmit an uplink signal or receive a downlink signal using the carrier in the first frequency band and the carrier in the second frequency band according to the control signal transmitted by the radio base station.

The second feature of the present invention is summarized in that a radio base station used in a mobile communication system having a structure in which a first communication area using a carrier in a first frequency band and a second communication area using a carrier in a second frequency band geographically overlap at least in part, and configured to manage the first communication area and the second communication area, the radio base station comprising, a determination unit configured to determine whether to perform carrier aggregation, by which a mobile station transmits an uplink signal using the carrier in the first frequency band and the carrier in the second frequency band, on a basis of at least one of location of the mobile station, a radio quality at the mobile station, a degree of congestion in the first communication area and the second communication area, a number of mobile stations in communication in the first communication area and the second communication area, a type of a data signal transmitted by the mobile station, an amount of data in a transmission buffer at either a radio base station or the mobile station, capability of the mobile station, and a movement speed of the mobile station and a control signal transmission unit configured to transmit a control signal for specifying the carrier in the first frequency band and the carrier in the second frequency band when it is determined to perform the carrier aggregation.

The third feature of the present invention is summarized in that a method for controlling a radio base station used in a mobile communication system configured such that a first communication area using a carrier in a first frequency band and a second communication area using a carrier in a second frequency band geographically overlap at least in part, and configured to manage the first communication area and the second communication area, the method comprising, a step of determining whether to perform carrier aggregation, by which a mobile station transmits an uplink signal using the carrier in the first frequency band and the carrier in the second frequency band, on a basis of at least one of location of the mobile station, a radio quality at the mobile station, a degree of congestion in the first communication area and the second communication area, a number of mobile stations in communication in the first communication area and the second communication area, a type of a data signal transmitted by the mobile station, an amount of data in a transmission buffer at either a radio base station or the mobile station, capability of the mobile station, and a movement speed of the mobile station and a step of transmitting a control signal for specifying the carrier in the first frequency band and the carrier in the second frequency band when it is determined to perform the carrier aggregation.

## EFFECTS OF THE INVENTION

As has been described above, according to the present invention, it is possible to provide a mobile communication system capable of maximizing the effect obtained by performing "Carrier Aggregation", a radio base station, and a control method.

## BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a functional block diagram of a radio base station according to the first embodiment of the present invention.
[Fig. 3] Fig. 3 is a functional block diagram of a mobile station according to the first embodiment of the present invention.
[Fig. 4] Fig. 4 is a diagram explaining "Carrier Aggregation" performed by a mobile station according to the first embodiment of the present invention.
[Fig. 5] Fig. 5 is a diagram explaining "Carrier Aggregation" performed by a mobile station according to the first embodiment of the present invention.
[Fig. 6] Fig. 6 is a flowchart illustrating the operation of a mobile station according to the first embodiment of the present invention.
[Fig. 7] Fig. 7 is a sequence diagram illustrating an operation of a mobile communication system according to the first embodiment of the present invention.
[Fig. 8] Fig. 8 is a flowchart illustrating an operation of a radio base station according to the first embodiment of the present invention.

**BEST MODES FOR CARRYING OUT THE INVENTION**

(Configuration of mobile communication system according to first embodiment of present invention)

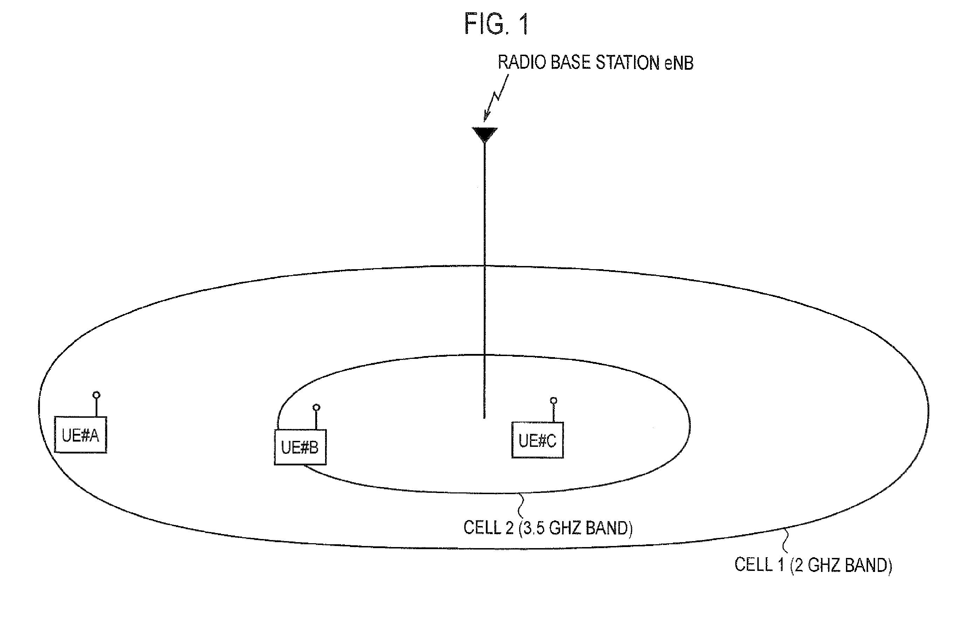

With reference to the accompanying drawings, a mobile communication system according to a first embodiment of the present invention will be explained. In all drawings for explaining the present embodiment, the same reference numerals are used to designate elements having the same function, and redundant description will not be repeated.
A mobile communication system according to the present embodiment, for example, is a system which employs an "Evolved UTRA and UTRAN (another name: Long Term Evolution or Super 3G)" scheme or an LTE-advanced scheme.
As illustrated in Fig. 1, in the mobile communication system according to the present embodiment, a cell 1 (a first communication area), where a carrier in a 2 GHz (a first frequency band) band is used, and a cell 2 (a second communication area), where a carrier in a 3.5 GHz (a second frequency band) band is used, geographically overlap each other at least in part.
Here, the cell 1 has a characteristic in that a low frequency is used, a cover area is wide, a frequency bandwidth used is small, and throughput is low, as compared with the cell 2.
Meanwhile, the cell 2 has a characteristic in that a high frequency is used, a cover area is narrow, a frequency bandwidth used is large, and throughput is high, as compared with the cell 1.
In the following description, it is assumed that a mobile station UE visits a carrier of 2 GHz band with a wide coverage in an idle state, that is, a standby state.
However, it is possible for the mobile station UE to perform the same process even when visiting the carrier in the 3.5 GHz band, as well as the carrier in the 2 GHz band.
In addition, the cell 1 using the carrier in the 2 GHz band and the cell 2 using the carrier in the 3.5 GHz band are exemplary only, and it is also possible to use other carriers, for example, a carrier of 800 MHz band and a carrier in the 2.6 GHz band. Furthermore, cells, where three or more carriers are used as well as two carriers, may geographically overlap each other at least in part.
However, the first frequency band and the second frequency band may also be called a frequency band. A frequency band in the LTE scheme or the LTE-Advanced scheme is defined in "5.5 Operating bands" of the 3GPP TS36.101.
For example, an uplink frequency in Band 1 is 1920 MHz to 1980 MHz and an uplink frequency in Band 6 is 830 MHz to 840 MHz.
In addition, in the case of applying the LTE-Advanced scheme, "Carrier Aggregation" may also be applied. That is, in an uplink or a downlink, communication using a plurality of "Component Carriers" is performed.
Here, the "Component Carrier" corresponds to one system carrier in the LTE scheme. That is, in the LTE scheme, communication is performed using one "Component Carrier". However, in the LTE-advanced scheme, communication may also be performed using two or more "Component Carriers".
In the mobile communication system according to the present embodiment, for a downlink, a "physical downlink shared channel (PDSCH)" and a "physical downling control channel (PDCCH)" are used, which are shared by each mobile station UE.
User data, that is, a normal data signal is transmitted through the "physical downlink shared channel (PDSCH)".
Furthermore, a control signal is notified via the "physical downlink control channel (PDCCH)", wherein the control signal includes information (i.e., downlink scheduling information) on a transport format of the ID and user data of the mobile station UE, which performs communication using the "physical downlink shared channel (PDSCH)", information (i.e., uplink scheduling information) on a transport format of the ID and user data of the mobile station UE, which performs communication using a "physical uplink shared channel (PUSCH)", and the like.
The "physical downlink control channel (PDCCH)" may also be called a "Downlink L1/L2 Control Channel". Furthermore, the "downlink scheduling information" and the "uplink scheduling grant" may also be collectively called "Downlink Control Information (DCI)".
Furthermore, in the downlink, broadcast information is transmitted after being mapped to a "BCCH: Broadcast Control Channel" as a logic channel.
Here, a part of information transmitted via the "BCCH" is mapped to a "BCH: Broadcast Channel" which is a transport channel, and the information mapped to the "BCH" is transmitted to the mobile station UE in the cell via a "P-BCH: Physical Broadcast Channel" which is a physical channel.
Furthermore, a part of the information transmitted via the "BCCH" is mapped to "DL-SCH: Downlink Shared Channel" which is a transport channel, and the information mapped to the "DL-SCH" is transmitted to the mobile station UE in the cell via the "physical downlink shared channel (PDSCH)" which is a physical channel.
In the mobile communication system according to the present embodiment, for an uplink, a "physical uplink shared channel (PUSCH)" and a "physical uplink shared channel (PUSCH)" are used, which are shared for use by each mobile station UE.

User data, that is, a normal data signal is transmitted through the "physical uplink shared channel (PUSCH)".

Furthermore, downlink quality information (CQI: Channel Quality Indicator), which is used for a scheduling process and AMCS (Adaptive Modulation and Coding Scheme) of the "physical uplink shared channel (PUSCH)", and transmission confirmation information (Acknowledgement Information) in the "physical uplink shared channel (PUSCH)" are transmitted through the "physical uplink shared channel (PUSCH)".

The downlink quality information may also be called "CSI (Channel State Indicator)" which is an indicator including "CQI", "PMI (Pre-coding Matrix Indicator)", and "RI (Rank Indicator)".

Furthermore, the content of the transmission confirmation information is expressed by one of a positive response (ACK: Acknowledgement) indicating that a transmission signal has been appropriately received, and a negative response (NACK: Negative Acknowledgement) indicating that the transmission signal has not been appropriately received.

In addition, when the transmission timing of the above-mentioned CQI, or transmission confirmation information is the same as the transmission timing of the "physical uplink shared channel (PUSCH)", the CQI or the transmission confirmation information may be transmitted and multiplexed to the "physical uplink shared channel (PUSCH)".

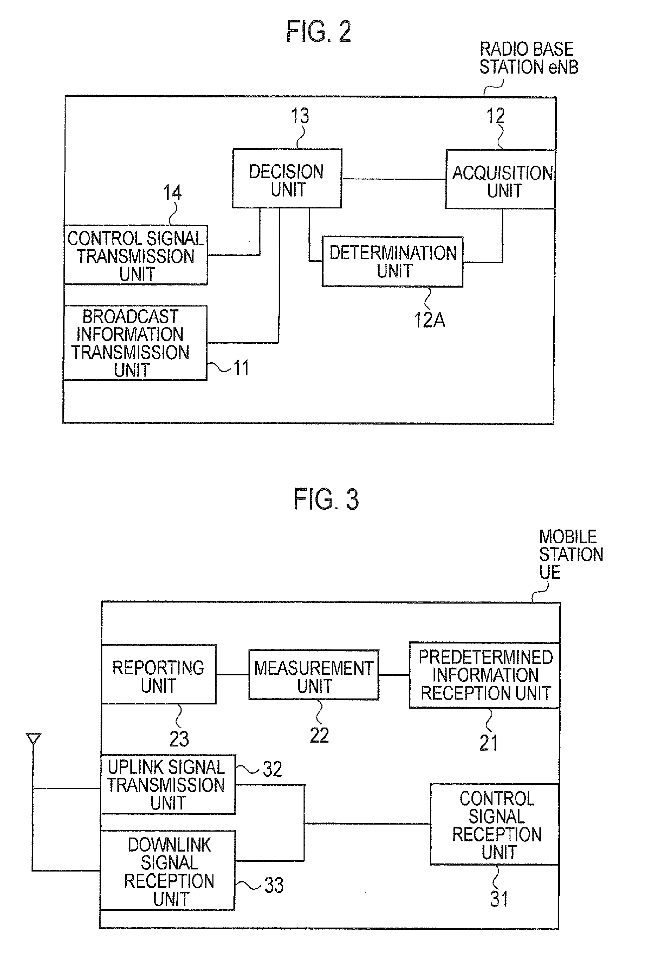

As illustrated in Fig. 2, the radio base station eNB includes a broadcast information transmission unit 11, an acquisition unit 12, a determination unit 12A, a decision unit 13, and a control signal transmission unit 14.

The broadcast information transmission unit 11 is configured to transmit broadcast information to the mobile stations UE in the cell 1 and the cell 2 via the above-mentioned BCCH.

Here, the broadcast information transmission unit 11 may also be configured to transmit broadcast information for specifying predetermined information. As will be explained later, the mobile station UE is configured to perform a measurement process based on the predetermined information.

For example, the broadcast information transmission unit 11 may also be configured to specify the radio quality at the mobile station UE as the predetermined information.

For example, the broadcast information transmission unit 11 may also be configured to specify, as the radio quality at the mobile station UE, "CQI", "SIR (Signal-to-Interference Ratio)", "path loss", "RSRP (Reference Signal Received Power)", "RSRQ (Reference Signal Received Quality)", "Power Headroom" and the like.

Furthermore, in such a case, the broadcast information transmission unit 11 may also be configured to specify, as the predetermined information, a predetermined carrier or a predetermined frequency band, as a measurement object of the radio quality at the mobile station UE, in conjunction with the radio quality at the mobile station UE.

More particularly, the broadcast information transmission unit 11 may also be configured to specify, as the predetermined information, the following information regarding a carrier as a measurement object of the radio quality at the mobile station UE, in conjunction with the radio quality at the mobile station UE.

<Information on the carrier>

- A carrier frequency of a downlink
- An out-of-service determination threshold value (Qrxlevmin) of a downlink, that is, a minimum value of a reception level of a reference signal of a downlink

- Maximum transmission power of an uplink
- Measurement bandwidth
- Radio quality offset (q-OffsetFreq) of a frequency direction

Otherwise, the broadcast information transmission unit 11 is configured to additionally transmit system information for cell reselection of a different frequency to the mobile station UE as the broadcast information, and may be configured to specify predetermined information of the system information to the mobile station UE.

In such a case, for example, a flag regarding whether to measure carriers other than a carrier visiting and report predetermined information may be defined in the system information. Furthermore, in addition to the flag, an information element for specifying predetermined information to be measured may also be defined.

For example, the broadcast information transmission unit 11 may also be configured to specify, as the predetermined carrier, the carrier frequency of the cell 1 and the carrier frequency of the cell 2 in the mobile communication system illustrated in Fig. 1.

Furthermore, for example, the broadcast information transmission unit 11 may also be configured to specify, as the predetermined frequency band, the frequency band (i.e., the 2 GHz band) of the cell 1 and the frequency band (i.e., the 3.5 GHz band) of the cell 2 in the mobile communication system illustrated in Fig. 1.

In addition, the frequency band may also include a frequency band. A frequency band in the LTE scheme or the LTE-Advanced scheme is defined in "5.5 Operating bands" of the 3GPP TS36.101. For example, a downlink frequency in Band 1 is 2110 MHz to 2170 MHz and a downlink frequency in Band 6 is 875 MHz to 885 MHz.

In addition, the broadcast information transmission unit 11 may also be configured to specify, as the predetermined carrier, a carrier which may be set as an "Anchor Carrier" which will be explained later. The "Anchor Carrier" may also be called a "Main Carrier".

Furthermore, the broadcast information transmission unit 11 may also be configured to specify, as the predetermined frequency band, a frequency band including the carrier which may be set as the above-mentioned "Anchor Carrier".

Moreover, the broadcast information transmission unit 11 may also be configured to specify, as the predetermined information, the location of the mobile station UE, the radio quality at the mobile station UE, the amount of data in a transmission buffer at the mobile station UE, or the movement speed of the mobile station UE.

Furthermore, the broadcast information transmission unit 11 may also be configured to specify, as the predetermined information, reporting criteria of a measurement result at the mobile station UE. For example, the broadcast information transmission unit 11 may also be configured to specify, as the predetermined information, a first threshold value and a second threshold value which will be explained later.

Here, the first threshold value and the second threshold value may be equal to each other or different from each other. Furthermore, the first threshold value and the second threshold value may also be equal to "Sintraserch" or "Snonintraserch" defined in the LTE scheme.

In addition, information transmitted to the mobile station UE by the broadcast information transmission unit 11 via the BCCH may be transmitted to the mobile station UE by the radio base station eNB by way of an RRC message.

Here, the RRC message corresponds to a control signal (DCCH: Dedicated Control Channel) individually exchanged between the radio base station eNB and the mobile station UE.

For example, the radio base station eNB notifies the mobile station UE performing HO (Handover) of the information at a radio base station eNB which is a handover destination. In such a case, it is not necessary for the mobile station UE to newly read broadcast information of a radio base station eNB (an HO destination) again as a handover destination, it is possible to reduce an Interruption time at the time of handover.

The RRC message may be transmitted to the mobile station UE via the broadcast information transmission unit 11, or may be transmitted to the mobile station UE from a separate functional unit in the radio base station eNB.

The acquisition unit 12 is configured to acquire determination information for determining whether to perform carrier aggregation by which the mobile station UE transmits an uplink signal using the carrier in the 2 GHz band and the carrier in the 3.5 GHz band.

Particularly, the acquisition unit 12 is configured to acquire, as the determination information, at least one of the location of the mobile station UE, the radio quality at the mobile station UE, the degree of congestion in the cell 1 and the cell 2, the number of mobile stations UEs in communication in the cell 1 and the cell 2, the type (e.g., a VoIP data signal and a best-effort data signal) of a data signal transmitted by the mobile station UE, the amount of data in a transmission buffer at either the radio base station eNB or the mobile station UE, the movement speed of the mobile station UE, and information indicating the capability of the mobile station UE.

For example, the acquisition unit 12 may also be configured to acquire, as the determination information, a measurement result reported by the mobile station UE in a random access procedure.

Otherwise, for example, the acquisition unit 12 may also be configured to acquire, as the determination information, a measurement result reported from the mobile station UE through an RRC message, or a measurement result reported from the mobile station UE through a Measurement Report.

Furthermore, the acquisition unit 12 may also be configured to acquire, as the determination information, the amount of data in a transmission buffer at the radio base station eNB from the transmission buffer in the radio base station eNB.

The determination unit 12A is configured to determine whether to perform carrier aggregation, by which the mobile station UE transmits an uplink signal using the carrier in the 2 GHz band and the carrier in the 3.5 GHz band, on the basis of the determination information acquired by the acquisition unit 12.

For example, the determination unit 12A may also determine to perform the carrier aggregation when the location of the mobile station UE is reported as the determination information reported from the mobile station UE and the location of the mobile station UE is the center of a cell, and may also determine to not perform the carrier aggregation when the location of the mobile station UE is the edge of the cell.

More particularly, the determination unit 12A may also determine to perform the carrier aggregation when the distance from the radio base station eNB to the mobile station UE is equal to or less than a predetermined threshold value, and may determine not to perform the carrier aggregation in other cases.

Otherwise, the determination unit 12A may also determine to perform the carrier aggregation when the radio quality at the mobile station UE, for example, SIR is equal to or more than a predetermined threshold value, and may determine not to perform the carrier aggregation when the radio quality at the mobile station UE, for example, the SIR is not equal to or more than the predetermined threshold value.

In the above-mentioned example, the SIR is used as the radio quality. However, instead of the SIR, CQI, RSRP, Pathloss, a Power Headroom, RSRQ and the like may also be used.

Here, when the radio quality of the carrier in the 2 GHz band and the radio quality of the carrier in the 3.5 GHz band are reported as the radio quality reported from the mobile station UE, it may also be determined whether to perform the carrier aggregation on the basis of the radio qualities at the both carriers, it may also be determined whether to perform the carrier aggregation on the basis of only the radio quality of the carrier in the 2 GHz band, or it may also be determined whether to perform the carrier aggregation on the basis of only the radio quality of the carrier in the 3.5 GHz band.

In addition, as will be explained later, the mobile station UE may perform a process of reporting both the radio quality of the carrier in the 2 GHz band and the radio quality of the carrier in the 3.5 GHz band when the radio quality of the 2 GHz band is equal to or less than a predetermined threshold value, and reporting only the radio quality of the carrier in the 2 GHz band when the radio quality of the 2 GHz band is not equal to or less than the predetermined threshold value.

Here, the state, in which the mobile station UE reports only the radio quality of the carrier in the 2 GHz band, represents that the radio qualities of the 2 GHz band and the 3.5 GHz band are sufficiently good.

Thus, when only the radio quality of the carrier in the 2 GHz band is reported as the radio quality reported from the mobile station UE, the determination unit 12A may determine to perform the carrier aggregation. When both the radio quality of the carrier in the 2 GHz band and the radio quality of the carrier in the 3.5 GHz band are reported as the radio quality reported from the mobile station UE, the determination unit 12A may determine not to perform the carrier aggregation.

Otherwise, when only the radio quality of the carrier in the 2 GHz band is reported as the radio quality reported from the mobile station UE, the determination unit 12A may determine to perform the carrier aggregation. When both of the radio quality of the carrier in the 2 GHz band and the radio quality of the carrier in the 3.5 GHz band are reported, the determination unit 12A may determine to perform the carrier aggregation if the radio quality the carrier in of the 3.5 GHz band is equal to or more than a predetermined threshold value, and determine not to perform the carrier aggregation if the radio quality of the carrier in the 3.5 GHz band is not equal to or more than the predetermined threshold value.

That is, the determination unit 12A may also determine whether to perform the carrier aggregation on the basis of whether the mobile station UE reports radio quality regarding a carrier in one of the plurality of frequency bands when a plurality of frequency bands exist.

Here, the carrier in one frequency band may include a carrier specified in advance by the radio base station eNB as will be explained later to be mainly measured.

Furthermore, for example, when the degree of congestion in the cell 1 and the cell 2 is low, that is, in the absence of congestion, the determination unit 12A may determine to perform the carrier aggregation. When the degree of congestion in the cell 1 and the cell 2 is high, that is, in the presence of congestion, the determination unit 12A may determine not to perform the carrier aggregation.

Since the determination is performed, when the degree of congestion is low, that is, when the improvement of peak throughput is expected, it is possible to perform the carrier aggregation, resulting in the further improvement of the peak throughput.

Meanwhile, when the degree of congestion is high, that is, when the improvement of peak throughput is not expected, the carrier aggregation is not performed, so that it is possible to reduce a scheduling process load at the radio base station eNB.

Furthermore, for example, when the type of a data signal to be transmitted is a best effort data signal, the determination unit 12A may determine to perform the carrier aggregation. When the type of the data signal to be transmitted is a VoIP data signal, the determination unit 12A may determine not to perform the carrier aggregation.

Since the determination is performed, when performing communication of a data signal of a best effort side requiring high-rate communication, it is possible to perform the carrier aggregation.

Meanwhile, in the case of the VoIP data signal not requiring the high-rate communication, the carrier aggregation is not performed, so that it is possible to reduce a scheduling processing load at the radio base station eNB.

Furthermore, for example, when the amount of data in the transmission buffer at either the radio base station eNB or the mobile station UE is equal to or more than a predetermined threshold value, the determination unit 12A may determine to perform the carrier aggregation. When the amount of data in the transmission buffer at either the radio base station eNB or the mobile station UE is not equal to or more than a predetermined threshold value, the determination unit 12A may determine not to perform the carrier aggregation.

Since the determination is performed, when the size of data to be transmitted is large, that is, when it is necessary to perform high-rate communication, it is possible to perform the carrier aggregation.

Meanwhile, when the size of data to be transmitted is small, that is, when it is not necessary to perform the high-rate communication, the carrier aggregation is not performed, so that it is possible to reduce a scheduling processing load at the radio base station eNB.

Furthermore, for example, when the movement speed of the mobile station UE is equal to or less than a predetermined threshold value, the determination unit 12A may determine to perform the carrier aggregation. When the movement speed of the mobile station UE is not equal to or less than the predetermined threshold value, the determination unit 12A may determine to not perform the carrier aggregation. Since the determination is performed, when the movement speed is low and it is less probable that the mobile station UE goes out of the cell of the 3.5 GHz band, that is, the cell 2, it is possible to perform the carrier aggregation.

Meanwhile, when the movement speed of the mobile station UE is high and it is highly probable that the mobile station UE goes out of the cell of the 3.5 GHz band, that is, the cell 2, the carrier aggregation is not performed, so that it is possible to reduce a scheduling processing load at the radio base station eNB.

Furthermore, for example, when it is possible to perform the carrier aggregation as the capability of the mobile station UE, the determination unit 12A may determine to perform the carrier aggregation. When it is not possible to perform the carrier aggregation as the capability of the mobile station UE, the determination unit 12A may determine not to perform the carrier aggregation.

In addition, in the above-mentioned example, it is determined whether to perform the carrier aggregation on the basis of each of the location of the mobile station UE, the radio quality at the mobile station UE, the degree of congestion in the cell 1 and the cell 2, the number of mobile stations UEs in communication in the cell 1 and the cell 2, the type (e.g., the VoIP data signal and the best-effort data signal) of the data signal transmitted by the mobile station UE, the amount of data in the transmission buffer at either the radio base station eNB or the mobile station UE, the movement speed of the mobile station UE, and the capability of the mobile station UE. However, it may also be determined whether to perform the carrier aggregation on the basis of two or more pieces of determination information.

The decision unit 13 is configured to decide a carrier for transmitting a control signal, that is, an "Anchor Carrier" on the basis of the determination result by the determination unit 12A. Here, the anchor carrier may also be called a main carrier or a primary carrier.

The anchor carrier, the main carrier, and the primary carrier, may also include a carrier through which radio quality information of a downlink, transmission confirmation information of a downlink data signal, and a scheduling request are transmitted in relation to an uplink, and include a carrier for monitoring the establishment and failure of a radio link in relation to the downlink.

Here, the control signal, for example, may also correspond to an RRC message or an NAS message.

Furthermore, the control signal may also correspond to DCCH (Dedicated Control Channel) as a logic channel.

Otherwise, the control signal may also correspond to an uplink scheduling grant or downlink scheduling information in a downlink.

Furthermore, the control signal may also correspond to a random access signal, that is, a random access preamble in an uplink. In addition, the random access preamble is mapped to PRACH (Physical Random Access Channel).

Otherwise, the control signal may also correspond to PUCCH (Physical Uplink Control Channel) in an uplink.

In addition, the definition of the "Anchor Carrier" is not limited to the above-mentioned carrier for transmitting the control signal. That is, the "Anchor Carrier" may also be defined for anything else. For example, the definition of the "Anchor Carrier" may also reach a carrier for transmitting a "Measurement Report", a "Handover Command (a handover command signal)", and a "Handover Complete (a handover complete signal)".

In addition, when it is determined that the carrier aggregation should be performed, the determination unit 12A may be configured to transmit a control signal for establishing communication for performing carrier aggregation using the carrier in the 2 GHz band and the carrier in the 3.5 GHz band.

For example, the determination unit 12A may determine that a mobile station UE#A in a standby state in the vicinity of the edge of the cell 1 as illustrated in Fig. 1 should not perform the above-mentioned carrier aggregation, that is, the mobile station UE#A should communicate with the radio base station eNB using only the carrier in the 2 GHz band.

Here, the determination unit 12A may determine whether the mobile station UE is in the standby state in the vicinity of the edge of the cell 1 on the basis of the location of the mobile station UE reported from the mobile station UE, or the radio quality at the mobile station UE as described above.

When the radio quality at the mobile station UE, for example, is determined by the "RSRP", and when the "RSRP" at the mobile station UE is low, the determination unit 12A may be determined that the mobile station UE is in the standby state in the vicinity of the edge of the call 1.

Otherwise, the determination unit 12A may be configured to determine that the mobile station UE#A in the standby state in the vicinity of the edge of the cell 1 as illustrated in Fig. 1 should perform the above-mentioned carrier aggregation, that is, the mobile station UE#A should communicate with the radio base station eNB using the carrier in the 2 GHz band and the carrier in the 3.5 GHz band, and the decision unit 13 may be configured to set the carrier in the 2 GHz band as the "Anchor Carrier".

That is, when the radio quality at the mobile station UE, for example, the RSRP is equal to or less than a predetermined threshold value, the determination unit 12A may be configured to set the carrier of the 2 GHz band as the anchor carrier.

When the above determination is performed, it is possible to configure such that an anchor carrier of 2 GHz band can be set to a mobile station UE that may regard that the coverage of 2 GHz band is not sufficient although the coverage of 2 GHz exits, as in the mobile station UE#A, thereby realizing stable communication. In addition, in the above-mentioned example, the "RSRP" is used as the radio quality. However, radio qualities other than the "RSRP" may also be used.

Furthermore, the determination unit 12A may determine that a mobile station UE#B in a standby state in the vicinity of the edge of the cell 2 as illustrated in Fig. 1 should perform the above-mentioned carrier aggregation, that is, the mobile station UE#B should communicate with the radio base station eNB using the carrier in the 2 GHz band and the carrier in the 3.5 GHz band.

More particularly, when the radio quality at the mobile station UE, for example, the "RSRP", is equal to or more than a first threshold value and is equal to or less than a second threshold value, the determination unit 12A may determine to perform the carrier aggregation.

In such a case, the decision unit 13 may be configured to set the carrier in the 2 GHz band as the "Anchor Carrier", or decide a carrier with the lowest degree of congestion in the 2 GHz band and the 3.5 GHz band as the "Anchor Carrier".

When the above determination is performed, it is possible to set the anchor carrier according to the degree of congestion of each carrier when the mobile station UE#B exists both in the coverage of the 2 GHz band and the coverage of the 3.5 GHz band, so that communication can be more stably realized. In addition, in the above-mentioned example, the "RSRP" is used as the radio quality. However, radio qualities other than the "RSRP" may also be used.

Otherwise, when the determination unit 12A has determined to perform the carrier aggregation, the decision unit 13 may be configured to specify the carrier in the 2 GHz band as the anchor carrier if the movement speed is equal to or more than the predetermined threshold value, and specify the carrier in the 3.5 GHz band as the anchor carrier if the movement speed is not equal to or more than the predetermined threshold value.

Since the above determination is performed, when the movement speed is high and it is highly probable that the mobile station UE#B goes out of the cell of the 3.5 GHz band, that is, the cell 2, it is possible to prevent the 3.5 GHz band from being set as the anchor carrier.

On the contrary, when the movement speed is low and it is less probable that the mobile station UE#B goes out of the cell of the 3.5 GHz band, that is, the cell 2, it is possible to set the 3.5 GHz band with an abundant radio resource as the anchor carrier.

Otherwise, when the determination unit 12A has determined to perform the carrier aggregation, the decision unit 13 may be configured to specify the carrier in the 3.5 GHz band as the anchor carrier if the amount of data in the transmission buffer is equal to or more than the predetermined threshold value, and specify the carrier in the 2 GHz band as the anchor carrier if the amount of data in the transmission buffer is not equal to or more than the predetermined threshold value.

Since the determination is performed, when the amount of data to be transmitted is large, it is possible to set the 3.5 GHz band as the anchor carrier.

Otherwise, when the determination unit 12A has determined to perform the carrier aggregation, the decision unit 13 may be configured to specify the carrier in the 3.5 GHz band as the anchor carrier if the type of the data signal to be transmitted is the best effort data signal, and specify the carrier in the 2 GHz band as the anchor carrier if the type of the data signal to be transmitted is the VoIP data signal.

Since the determination is performed, it is possible to set the anchor carrier according to each data type. In general, since a scheduling process when a plurality of data types exist is complicated, the anchor carrier is set according to each data type, so that it is possible to reduce a scheduling processing load.

Furthermore, the determination unit 12A may determine that a mobile station UE#C in a standby state in the vicinity of the center of the cell 2 as illustrated in Fig. 1 should perform the above-mentioned carrier aggregation, that is, the mobile station UE#C should communicate with the radio base station eNB using the carrier in the 2 GHz band and the carrier in the 3.5 GHz band.

In such a case, the decision unit 13 may be configured to set the carrier in the 3.5 GHz band as the "Anchor Carrier", or decide a carrier with the lowest degree of congestion in the 2 GHz band and the 3.5 GHz band as the "Anchor Carrier".

Otherwise, the determination unit 12A may also determine that the mobile station UE#C in the standby state in the vicinity of the center of the cell 2 as illustrated in Fig. 1 should not perform the above-mentioned carrier aggregation, that is, the mobile station UE#C should communicate with the radio base station eNB using only the carrier in the 3.5 GHz band.

The control signal transmission unit 14 is configured to transmit a control signal for notifying a radio resource, which is used for the transmission of an uplink signal at the mobile station UE, via the "physical downlink control channel (PDCCH)" in the "Anchor Carrier" decided by the decision unit 13.

Furthermore, the control signal transmission unit 14 is configured to transmit a control signal for notifying a radio resource, which is used for the transmission of a downlink signal, via the "physical downlink control channel (PDCCH)" in the "Anchor Carrier", which is decided by the decision unit 13, to the mobile station UE. In such a case, the downlink signal is transmitted in a subframe the same as a subframe in which the physical downlink control channel is transmitted.

For example, when the determination unit 12A has determined that it is necessary to perform the carrier aggregation, the control signal transmission unit 14 is configured to transmit a control signal for specifying the carrier in the 2 GHz band and the carrier in the 3.5 GHz band.

In addition, the above-mentioned signal on the physical downlink control channel (PDCCH) may be transmitted using only the anchor carrier, or, instead, may be transmitted in each "Component Carrier". In such a case, the control signal transmission unit 14 may also transmit the signal on the physical downlink control channel using the "Anchor Carrier" decided by the decision unit 13 and carriers other than the "Anchor Carrier".

As illustrated in Fig. 3, the mobile station UE includes a predetermined information reception unit 21, a measurement unit 22, a reporting unit 23, a control signal reception unit 31, and an uplink signal transmission unit 32.

The predetermined information reception unit 21 is configured to receive the predetermined information specified by the radio base station eNB using the broadcast information.

The measurement unit 22 is configured to perform a measurement process based on the predetermined information received by the predetermined information reception unit 21.

For example, the measurement unit 22 may be configured to measure the radio quality (e.g., "CQI", "SIR", "path loss", "RSRP", "RSRQ (Reference Signal Received Quality)", and "Power Headroom") at the above-mentioned predetermined carrier or the carrier in the above-mentioned predetermined frequency band, the location of the mobile station UE, the radio quality at the mobile station UE, the amount of data in the transmission buffer at the mobile station UE, or the movement speed of the mobile station UE according to the predetermined information.

Here, the measurement unit 22 may also measure a Wideband CQI, which is CQI of the entire system band, as the CQI. When the system band is divided into a plurality of sub-bands, the measurement unit 22 may also measure CQIs of each sub-band. Furthermore, the measurement unit 22 may also measure a value obtained by further averaging the CQI in the temporal direction.

Here, the measurement unit 22 may also measure SIR of a downlink reference signal as the SIR. In such a case, the measurement unit 22 may also measure SIR of the entire system band as the SIR of the downlink reference signal. When the system band is divided into a plurality of sub-bands, the measurement unit 22 may also measure SIRs of each sub-band.

Here, the measurement unit 22 may calculate the path loss from the transmission power at the radio base station eNB and the received power at the mobile station UE in relation to the downlink reference signal. In such a case, the path loss may be measured as follows.

$$\text{Path loss} = (\text{transmission power at the radio base station eNB})$$
$$- (\text{received power at the mobile station UE})$$

Here, the measurement unit 22 may also measure received power of the entire system band as the "RSRP", that is, the received power of the downlink reference signal. When the system band is divided into a plurality of sub-bands, the measurement unit 22 may also measure the received power of each sub-band.

Here, the measurement unit 22 may calculate, as the Power Headroom, the difference between maximum transmission power and transmission power of an uplink transmitted.

Here, the measurement unit 22 may also measure a Doppler frequency as the movement speed of the mobile station UE, measure the movement speed of the mobile station UE on the basis of GPS data and the like, or measure the movement speed of the mobile station UE on the basis of the number of cells traveled by the mobile station UE.

More particularly, the measurement unit 22 may acquire a time correlation value of the downlink reference signal, and measure the Doppler frequency on the basis of the time correlation value.

That is, when the time correlation value is large, the measurement unit 22 may regard that a temporal change in a propagation environment is small, and determine that the Doppler frequency is low, that is, the movement speed is low.

On the contrary, when the time correlation value is small, the measurement unit 22 may regard that the temporal change in the propagation environment is large, and determine that the Doppler frequency is high, that is, the movement speed is high.

Furthermore, when measuring the movement speed of the mobile station UE on the basis of the number of cells traveled by the mobile station UE, the measurement unit 22 may determine that the movement speed of the mobile station UE is high if the number of cells traveled by the mobile station UE is large, and may determine that the movement speed of the mobile station UE is low if the number of cells traveled by the mobile station UE is small.

Furthermore, when measuring the movement speed of the mobile station UE, the measurement unit 22 may be configured to measure the state (a high speed, a medium speed, a low speed) of the movement speed of the mobile station UE, instead of an actual measurement value of the movement speed of the mobile station UE.

The reporting unit 23 is configured to report the measurement result measured by the measurement unit 22 to the radio base station eNB in the random access procedure.

Particularly, the reporting unit 23 is configured to report the measurement result measured by the measurement unit 22 to the radio base station eNB using "Message 3" or "Message 5" in the random access procedure.

Furthermore, when the radio base station eNB performs a designation such that both the radio quality of the carrier in the 2 GHz band and the radio quality of the carrier in the 3.5 GHz band are reported as the above-mentioned measurement result, the reporting unit 23 may be configured to report both the radio quality of the carrier in the 2 GHz band and the radio quality of the carrier in the 3.5 GHz band if the radio quality of the carrier in the 2 GHz band becomes less than a first threshold value, and may be configured to report only the radio quality of the carrier in the 2 GHz band if the radio quality of the carrier in the 2 GHz band exceeds a second threshold value.

In such a case, if the radio quality of the carrier in the 2 GHz band becomes less than the first threshold value, the measurement unit 22 may be configured to measure both the radio quality of the carrier in the 2 GHz band and the radio quality of the carrier in the 3.5 GHz band. If the radio quality of the carrier in the 2 GHz band exceeds the second threshold value, the reporting unit 23 may be configured to measure only the radio quality of the carrier in the 2 GHz band.

Here, if the radio quality is sufficiently realized at the carrier in the 2 GHz band, since it is estimated that the radio quality is also sufficiently realized at the carrier in the 3.5 GHz band, it is presumed that the measurement unit 22 does not need to measure the radio quality of the carrier in the 3.5 GHz band, and the reporting unit 23 does not have to report the radio quality of the carrier in the 3.5 GHz band.

In addition, when the reporting unit 23 reports the measurement result measured by the measurement unit 22 to the radio base station eNB, since the radio quality of the carrier in the 2 GHz band exceeds the second threshold value, the measurement result may be notified in keeping with the report of only the radio quality of the carrier in the 2 GHz band. In such a case, for example, it may also be notified that an indicator notifying the report of only the radio quality of the carrier in the 2 GHz band.

Otherwise, when the reporting unit 23 reports the measurement result measured by the measurement unit 22 to the radio base station eNB, since the radio quality of the carrier in the 2 GHz band becomes less than the first threshold value, the measurement result may also be notified in keeping with the report of both the radio quality of the carrier in the 2 GHz band and the radio quality of the carrier in the 3.5 GHz band. In such a case, for example, it may also be notified an indicator indicating the report of both the radio quality of the carrier in the 2 GHz band and the radio quality of the carrier in the 3.5 GHz band.

Furthermore, the reporting unit 23 may also be configured to report the above-mentioned measurement result only when the above-mentioned report conditions are satisfied.

Furthermore, the reporting unit 23 may also be configured to report the capability information of the mobile station UE, in addition to the above-mentioned measurement result.

For example, the reporting unit 23 may also be configured to report the capability information of the mobile station UE regarding the carrier aggregation, in addition to the above-mentioned measurement result.

Here, the capability information, for example, may also include the following information element:

- Whether to support carrier aggregation
- Whether to support carrier aggregation using a discontinuous "Component Carrier" in one frequency band
- Whether to support carrier aggregation using a plurality of frequency bands
- A maximum value of the number of Component carriers when performing the above-mentioned carrier aggregation
- A combination of carrier aggregations supported by the mobile station UE

Here, the combination, for example, includes carrier aggregation of the 3.5 GHz band and the 2 GHz band, carrier aggregation of 800 MHz band and 900 MHz band, and carrier aggregation of the 1.7 GHz band, the 2 GHz band and the 1.5 GHz band.

- A maximum system bandwidth at each Component Carrier when performing carrier aggregation

The control signal reception unit 31 is configured to receive the control signal transmitted via the "physical downlink control channel (PDCCH)".

Here, when the carrier aggregation is performed, a radio resource in the carrier of the 2 GHz band and a radio resource in the carrier of the 3.5 GHz band are notified by the control signal as a radio resource (e.g., a radio resource for the "physical uplink shared channel (PUSCH)") used in the transmission of an uplink signal at the mobile station UE, or a radio resource (e.g., a radio resource for the "physical downlink shared channel (PDSCH)") of a downlink signal transmitted to the mobile station UE.

The uplink signal transmission unit 32 is configured to transmit the uplink signal via the radio resource, which is notified by the control signal transmitted by the radio base station eNB, for example, the "physical uplink shared channel (PUSCH)".

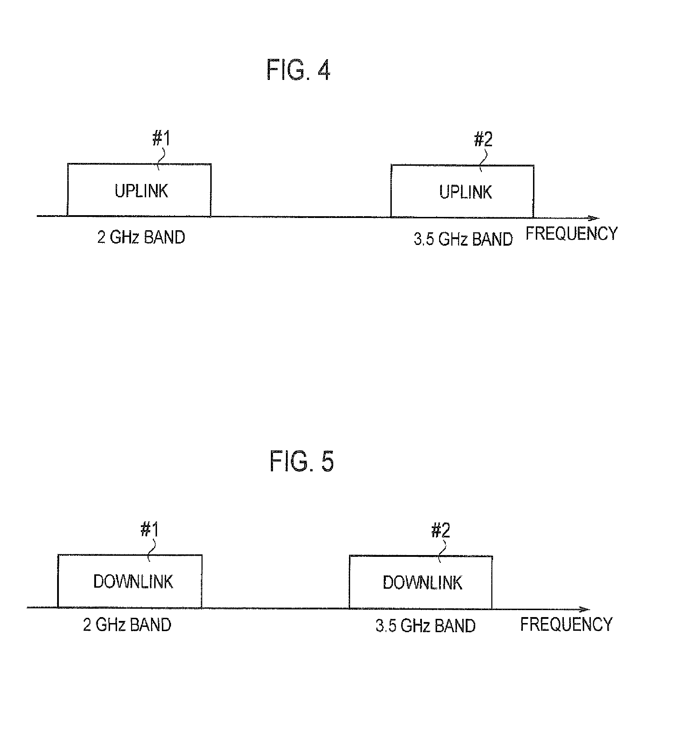

Here, when the execution of the carrier aggregation is notified by the control signal, that is, when the radio resource in the carrier of the 2 GHz band and the radio resource in the carrier of the 3.5 GHz band are notified as the radio resource for the "physical uplink shared channel (PUSCH)", the uplink signal transmission unit 32 is configured to transmit an uplink signal via the radio resource (e.g., the "physical uplink shared channel (PUSCH)") in the carrier of the 2 GHz band and the radio resource (e.g., the "physical uplink shared channel (PUSCH)") in the carrier of the 3.5 GHz band as illustrated in Fig. 4.

A downlink signal transmission unit 33 is configured to receive a downlink signal via the radio resource, which is notified by the control signal transmitted by the radio base station eNB, for example, the "physical downlink shared channel (PDSCH)".

Here, when the execution of the carrier aggregation is notified by the control signal, that is, when the radio resource in the carrier of the 2 GHz band and the radio resource in the carrier of the 3.5 GHz band are notified as the radio resource for the "physical downlink shared channel (PDSCH)", the downlink signal reception unit 33 is configured to receive a downlink signal via the radio resource (e.g., the "physical downlink shared channel (PDSCH)") in the carrier of the 2 GHz band and the radio resource (e.g., the "physical downlink shared channel (PDSCH)") in the carrier of the 3.5 GHz band as illustrated in Fig. 5.

In addition, when the mobile station UE is powered on, the mobile station UE may be configured to enter a standby state using a carrier in a frequency band (e.g., the 2 GHz band) determined in advance.

(Operation of mobile communication system according to first embodiment of present invention)

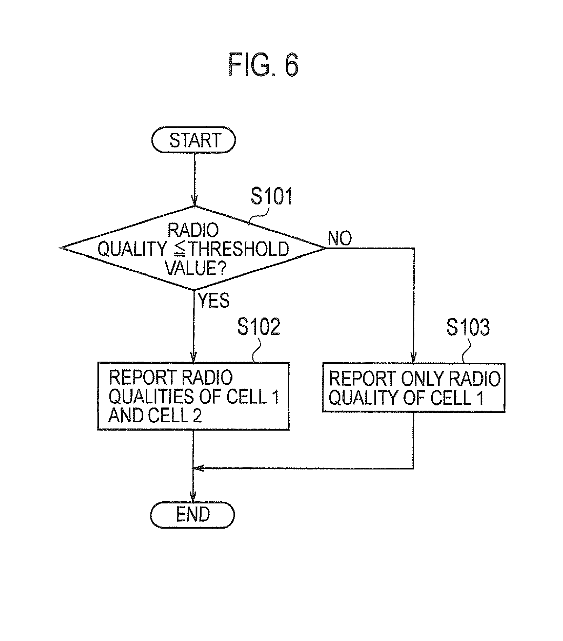

Firstly, with reference to Fig. 6, an example of the operation of the mobile station UE according to the present embodiment will be explained. In the example of Fig. 6, it is presumed that the radio base station eNB performs a designation such that the mobile station UE reports both the radio quality of the carrier in the 2 GHz band and the radio quality of the carrier in the 3.5 GHz band as the measurement result, and the first threshold value and the second threshold value are the same predetermined threshold value.

As illustrated in Fig. 6, in step S101, the mobile station UE measures the radio quality of the carrier in the 2 GHz band and compares the radio quality of the carrier in the 2 GHz band with the predetermined threshold value.

When the radio quality of the carrier in the 2 GHz band is equal to or less than the predetermined threshold value, the mobile station UE reports both the radio quality of the carrier in the 2 GHz band and the radio quality of the carrier in the 3.5 GHz band to the radio base station eNB in the random access procedure in step S102.

That is, the mobile station UE reports both the radio quality of the cell 1 and the radio quality of the cell 2 to the radio base station eNB in the random access procedure.

Meanwhile, when the radio quality of the carrier in the 2 GHz band exceeds the predetermined threshold value, the mobile station UE reports only the radio quality of the carrier in the 2 GHz band to the radio base station eNB in the random access procedure in step S103, that is, the mobile station UE does not report the radio quality of the carrier in the 3.5 GHz band.

That is, the mobile station UE reports only the radio quality of the cell 1 to the radio base station eNB in the random access procedure, that is, the mobile station UE does not report the radio quality of the cell 2.

In addition, in the above-mentioned description, when the radio quality is great, it is assumed that the radio quality is good. However, in the opposite case, the sign of step S101 may be reversed.

For example, when using path loss as the radio quality, as the path loss increases, the distance between the mobile station UE and the radio base station eNB increases, resulting in the deterioration of a propagation environment.

In such a case, when the radio quality (the path loss) is equal to or more than the predetermined threshold value, the mobile station UE may report the radio qualities of the cell 1 and the cell 2. In other cases, the mobile station UE may perform the process to report the radio quality of the cell 1.

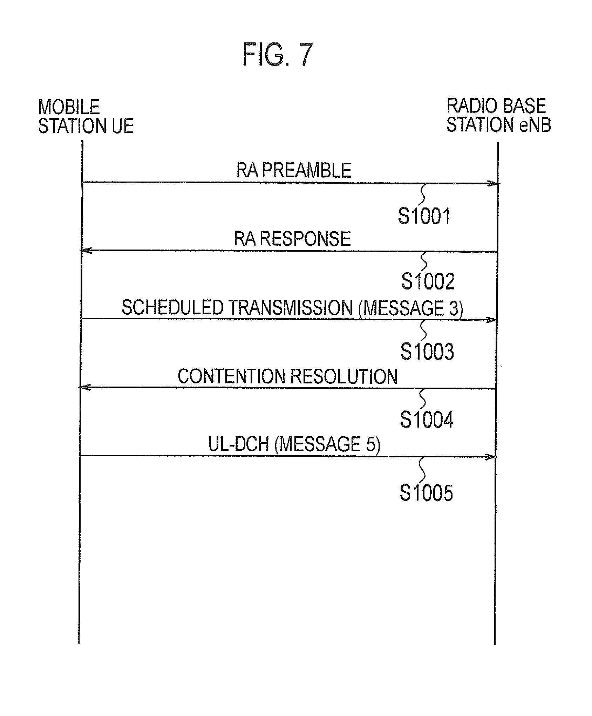

Secondly, with reference to Fig. 7, an example of the operation will be explained, in which the above-mentioned measurement result is notified from the mobile station UE in a standby state in the cell 1 to the radio base station eNB in the mobile communication system according to the present embodiment.

As illustrated in Fig. 7, when the random access procedure has been triggered, the mobile station UE transmits an "RA Preamble" to the radio base station eNB in step S1001.

In addition, for example, when the random access procedure is triggered from an idle state, that is, a standby state, is that when a call is issued or a call is received. That is, when the mobile station UE starts to communicate with the radio base station eNB, the random access procedure is triggered.

In step S1002, the radio base station eNB transmits an "RA Response" to the mobile station UE in response to the "RA preamble".

In step S1003, the mobile station UE transmits "Scheduled Transmission (Message 3)" to the radio base station eNB according to the "RA Response".

Here, the mobile station UE may transmit the "Scheduled Transmission (Message 3)" including the above-mentioned measurement result.

In step S1004, the radio base station eNB transmits "contention Resolution" to the mobile station UE in response to the "Scheduled Transmission (Message 3)".

In step S1005, the mobile station UE transmits a "Message 5" via a "UL-DCH" to the radio base station eNB when the radio base station eNB has instructed uplink transmission through an uplink scheduling grant to the mobile station UE after the "Contention Resolution".

Here, the mobile station UE may also transmit including the above-mentioned measurement result using the "Message 5".

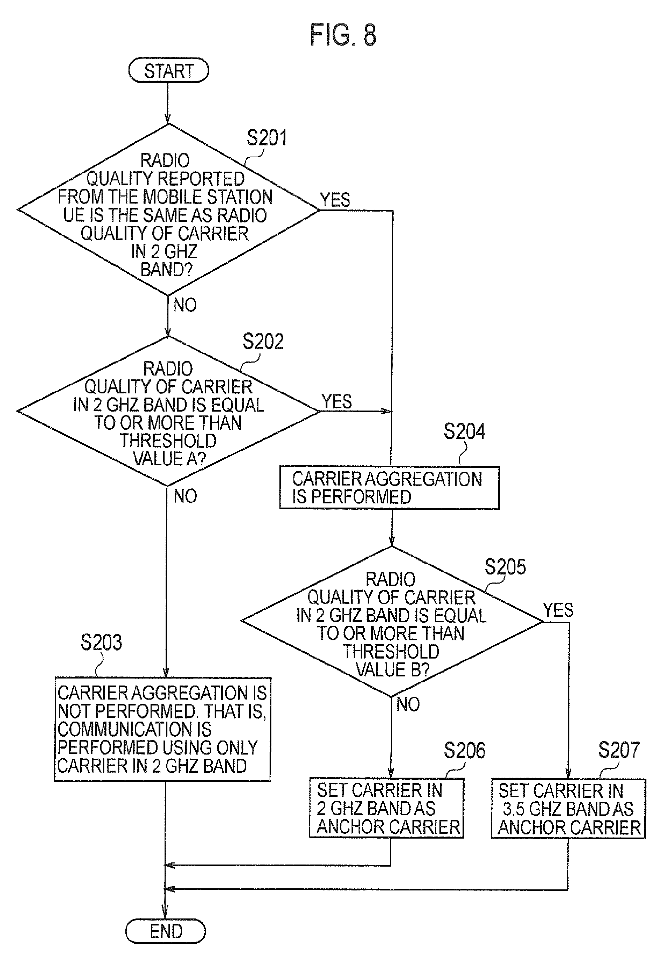

Thirdly, with reference to Fig. 8, an example of the operation of the radio base station eNB according to the present embodiment will be explained. In the example of Fig. 8, the radio base station eNB performs a designation such that the mobile station UE reports both the radio quality of the carrier in the 2 GHz band and the radio quality of the carrier in the 3.5 GHz band as the measurement result.

However, when the radio quality of the carrier in the 2 GHz band is larger than the predetermined threshold value, the mobile station UE is configured to report only the radio quality of the carrier in the 2 GHz band.

As illustrated in Fig. 8, in step S201, the radio base station eNB determines whether a radio quality reported from the mobile station UE is the only radio quality of the carrier in the 2 GHz band.

When the radio quality reported from the mobile station UE is the same as the radio quality of the carrier in the 2 GHz band (step S201: YES), the process proceeds to step S204.

Otherwise, when the radio quality reported from the mobile station UE is not the same as the radio quality of the carrier in the 2 GHz band (step S201: NO), that is, when the radio quality reported from the mobile station UE is the same as the radio quality of the carrier in the 2 GHz band and the radio quality of the carrier in the 3.5 GHz band, the process proceeds to step S202.

In step S202, the radio base station eNB determines whether the radio quality of the carrier in the 2 GHz band is equal to or more than a threshold value A.

In addition, in the present process, instead of the radio quality of the carrier in the 2 GHz band, the radio quality of the carrier in the 3.5 GHz band may also be compared with the threshold value A. Otherwise, instead of the radio quality of the carrier in the 2 GHz band, both the radio quality of the carrier in the 2 GHz band and the radio quality of the carrier in the 3.5 GHz band may also be compared with the threshold value A.

When the radio quality of the carrier in the 2 GHz band is equal to or more than the threshold value A (step S202: YES), the process proceeds to step S204. When the radio quality of the carrier in the 2 GHz band is not equal to or more than the threshold value A (step S202:NO), the process proceeds to step S203.

In step S203, the radio base station eNB determines not to perform the carrier aggregation and determines to communicate with the mobile station UE using the carrier of the 2 GHz band.

In step S204, the radio base station eNB determines to perform the carrier aggregation.

In step S205, the radio base station eNB determines whether the radio quality of the carrier in the 2 GHz band is equal to or more than a threshold value B.

When the radio quality of the carrier in the 2 GHz band is equal to or more than the threshold value B (step S205: YES), the process proceeds to step S207. When the radio quality of the carrier in the 2 GHz band is not equal to or more than the threshold value B (step S205: NO), the process proceeds to step S206.

In step S206, the radio base station eNB sets the carrier in the 2 GHz band as the anchor carrier.

In step S207, the radio base station eNB sets the carrier in the 3.5 GHz band as the anchor carrier.

(Operation and effect of the mobile communication system according to the first embodiment of present invention)

In accordance with the mobile communication system according to the present embodiment, since the radio base station eNB is configured to determine whether to perform the "Carrier Aggregation" on the basis of at least one of the location of the mobile station UE, the radio quality at the mobile station UE, the degree of congestion in the cell 1 and the cell 2, the number of mobile stations UEs in communication in the cell 1 and the cell 2, the type of the data signal transmitted by the mobile station UE, the amount of data in the transmission buffer at either the radio base station eNB or the mobile station UE, and the movement speed of the mobile station UE, it is possible to maximize the effect obtained by performing the "Carrier Aggregation".

Furthermore, in accordance with the mobile communication system according to the present embodiment, since the mobile station UE in an idle state is configured to report the measurement result specified by the radio base station eNB in the random access procedure, it is possible to quickly determine whether to perform the "Carrier Aggregation", resulting in a reduction of a delay time until communication starts.

Moreover, in accordance with the mobile communication system according to the present embodiment, when the radio quality of the carrier in the 2 GHz band exceeds a predetermined threshold value, the mobile station UE is configured to estimate that the radio quality of the carrier in the 3.5 GHz band is also sufficient and the mobile station UE is configured to report only the radio quality of the carrier in the 2 GHz band, that is, and not to report the radio quality of the carrier in the 3.5 GHz band, so that it is possible to prevent an increase in power consumption at the mobile station UE, and appropriately determine whether to perform the "Carrier Aggregation".

The features of this embodiment described above also can be described as bellow.

The first characteristic of this embodiment is summarized in that a mobile communication system having a structure in which a first communication area using a carrier in a first frequency band and a second communication area using a carrier in a second frequency band geologically overlap at least in one part, and including a radio base station eNB which manages the first communication area and the second communication area, and the radio base station eNB comprises a determination unit 12A configured to determine whether to perform carrier aggregation, by which a mobile station UE transmits an uplink signal using the carrier in the first frequency band and the carrier in the second frequency band, on a basis of at least one of location of the mobile station UE, a radio quality at the mobile station UE, a degree of congestion in the first communication area and the second communication area, a number of mobile stations UE in communication in the first communication area and the second communication area, a type of a data signal transmitted by the mobile station UE, an amount of data in a transmission buffer at either a radio base station eNB or the mobile station UE, capability of the mobile station UE, and a movement speed of the mobile station UE, and a control signal transmission unit 14 configured to transmit a control signal for specifying the carrier in the first frequency band and the carrier in the second frequency band when it is determined to perform the carrier aggregation, and the mobile station UE comprises a communication unit 32 configured to transmit an uplink signal or receive a downlink signal using the carrier in the first frequency band and the carrier in the second frequency band according to the control signal transmitted by the radio base station eNB.

In the first characteristic of this embodiment, the radio base station eNB further comprises a decision unit 13 configured to decide a primary carrier on the basis of at least one of the location of the mobile station UE, the radio quality at the mobile station UE, the degree of congestion in the first communication area and the second communication area, the number of the mobile stations UE in communication in the first communication area and the second communication area, the type of the data signal transmitted by the mobile station UE, the amount of data in the transmission buffer at either the radio base station eNB or the mobile station UE, the capability of the mobile station UE, and the movement speed of the mobile station UE.

In the first characteristic of this embodiment, the primary carrier is a carrier through which radio quality information of a downlink, transmission confirmation information of a downlink data signal, and a scheduling request are transmitted in relation to an uplink, and is a carrier for monitoring establishment and failure of a radio link in relation to the downlink.

In the first characteristic of this embodiment, the determination unit 12A is configured to transmit a control signal for establishing communication for performing carrier aggregation using the carrier in the first frequency band and the carrier in the second frequency band when it is determined to perform the carrier aggregation.

The second characteristic of this embodiment is summarized in that a radio base station eNB used in a mobile communication system having a structure in which a first communication area using a carrier in a first frequency band and a second communication area using a carrier in a second frequency band geographically overlap at least in part, and configured to manage the first communication area and the second communication area, the radio base station eNB comprising a determination unit 12A configured to determine whether to perform carrier aggregation, by which a mobile station UE transmits an uplink signal using the carrier in the first frequency band and the carrier in the second frequency band, on a basis of at least one of location of the mobile station UE, a radio quality at the mobile station UE, a degree of congestion in the first communication area and the second communication area, a number of mobile stations UE in communication in the first communication area and the second communication area, a type of a data signal transmitted by the mobile station UE, an amount of data in a transmission buffer at either a radio base station eNB or the mobile station UE, capability of the mobile station UE, and a movement speed of the mobile station UE, and a control signal transmission unit 14 configured to transmit a control signal for specifying the carrier in the first frequency band and the carrier in the second frequency band when it is determined to perform the carrier aggregation.

In the second characteristic of this embodiment, a decision unit 13 configured to decide a primary carrier on the basis of at least one of the location of the mobile station UE, the radio quality at the mobile station UE, the degree of congestion in the first communication area and the second communication area, the number of the mobile stations UE in communication in the first communication area and the second communication area, the type of the data signal transmitted by the mobile station UE, the amount of data in the transmission buffer at either the radio base station eNB or the mobile station UE, the capability of the mobile station, and the movement speed of the mobile station.

In the second characteristic of this embodiment, the determination unit 12A is configured to transmit a control signal for establishing communication for performing carrier aggregation using the carrier in the first frequency band and the carrier in the second frequency band when it is determined to perform the carrier aggregation.

The third characteristic of this embodiment is summarized in that a method for controlling a radio base station eNB used in a mobile communication system configured such that a first communication area using a carrier in a first frequency band and a second communication area using a carrier in a second frequency band geographically overlap at least in part, and configured to manage the first communication area and the second communication area, the method comprising a step of determining whether to perform carrier aggregation, by which a mobile station UE transmits an uplink signal using the carrier in the first frequency band and the carrier in the second frequency band, on a basis of at least one of location of the mobile station UE, a radio quality at the mobile station UE, a degree of congestion in the first communication area and the second communication area, a number of mobile stations UE in communication in the first communication area and the second communication area, a type of a data signal transmitted by the mobile station UE, an amount of data in a transmission buffer at either a radio base station eNB or the mobile station UE, capability of the mobile station UE, and a movement speed of the mobile station UE, and a step of transmitting a control signal for specifying the carrier in the first frequency band and the carrier in the second frequency band when it is determined to perform the carrier aggregation.

Note that operation of the above described the mobile station UE and the radio base station eNB may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the mobile station UE and the radio base station eNB. Also, the storage medium and the processor may be provided in the mobile station UE and the radio base station eNB as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

**Claims**

1. A mobile communication system having a structure in which a first communication area using a carrier in a first frequency band and a second communication area using a carrier in a second frequency band geologically overlap at least in one part, and including a radio base station which manages the first communication area and the second communication area, wherein
the radio base station comprises:

a determination unit configured to determine whether to perform carrier aggregation, by which a mobile station transmits an uplink signal using the carrier in the first frequency band and the carrier in the second frequency band, on a basis of at least one of location of the mobile station, a radio quality at the mobile station, a degree of congestion in the first communication area and the second communication area, a number of mobile stations in communication in the first communication area and the second communication area, a type of a data signal transmitted by the mobile station, an amount of data in a transmission buffer at either a radio base station or the mobile station, capability of the mobile station, and a movement speed of the mobile station; and
a control signal transmission unit configured to transmit a control signal for specifying the carrier in the first frequency band and the carrier in the second frequency band when it is determined to perform the carrier aggregation, and
the mobile station comprises:
a communication unit configured to transmit an uplink signal or receive a downlink signal using the carrier in the first frequency band and the carrier in the second frequency band according to the control signal transmitted by the radio base station.

2. The mobile communication system according to claim 1, wherein
the radio base station further comprises:

a decision unit configured to decide a primary carrier on the basis of at least one of the location of the mobile station, the radio quality at the mobile station, the degree of congestion in the first communication area and the second communication area, the number of the mobile stations in communication in the first communication area and the second communication area, the type of the data signal transmitted by the mobile station, the amount of data in the transmission buffer at either the radio base station or the mobile station, the capability of the mobile station, and the movement speed of the mobile station.

3. The mobile communication system according to claim 1, wherein
the primary carrier is a carrier through which radio quality information of a downlink, transmission confirmation information of a downlink data signal, and a scheduling request are transmitted in relation to an uplink, and is a carrier for monitoring establishment and failure of a radio link in relation to the downlink.

4. The mobile communication system according to claim 1, wherein
the determination unit is configured to transmit a control signal for establishing communication for performing carrier aggregation using the carrier in the first frequency band and the carrier in the second frequency band when it is determined to perform the carrier aggregation.

5. A radio base station used in a mobile communication system having a structure in which a first communication area using a carrier in a first frequency band and a second communication area using a carrier in a second frequency band geographically overlap at least in part, and configured to manage the first communication area and the second communication area, the radio base station comprising:

a determination unit configured to determine whether to perform carrier aggregation, by which a mobile station transmits an uplink signal using the carrier in the first frequency band and the carrier in the second frequency band, on a basis of at least one of location of the mobile station, a radio quality at the mobile station, a degree of congestion in the first communication area and the second communication area, a number of mobile stations in communication in the first communication area and the second communication area, a type of a data signal transmitted by the mobile station, an amount of data in a transmission buffer at either a radio base station or the mobile station, capability of the mobile station, and a movement speed of the mobile station; and
a control signal transmission unit configured to transmit a control signal for specifying the carrier in the first frequency band and the carrier in the second frequency band when it is determined to perform the carrier aggregation.

6. The radio base station according to claim 5, further comprising: a decision unit configured to decide a primary carrier on the basis of at least one of the location of the mobile station, the radio quality at the mobile station, the degree of congestion in the first communication area and the second communication area, the number of the mobile stations in communication in the first communication area and the second communication area, the type of the data signal transmitted by the mobile station, the amount of data in the transmission buffer at either the radio base station or the mobile station, the capability of the mobile station, and the movement speed of the mobile station.

7. The radio base station according to claim 5, wherein the determination unit is configured to transmit a control signal for establishing communication for performing carrier aggregation using the carrier in the first frequency band and the carrier in the second frequency band when it is determined to perform the carrier aggregation.

8. A method for controlling a radio base station used in a mobile communication system configured such that a first communication area using a carrier in a first frequency band and a second communication area using a carrier in a second frequency band geographically overlap at least in part, and configured to manage the first communication area and the second communication area, the method comprising:

a step of determining whether to perform carrier aggregation, by which a mobile station transmits an uplink signal using the carrier in the first frequency band and the carrier in the second frequency band, on a basis of at least one of location of the mobile station, a radio quality at the mobile station, a degree of congestion in the first communication area and the second communication area, a number of mobile stations in communication in the first communication area and the second communication area, a type of a data signal transmitted by the mobile station, an amount of data in a transmission buffer at either a radio base station or the mobile station, capability of the mobile station, and a movement speed of the mobile station; and
a step of transmitting a control signal for specifying the carrier in the first frequency band and the carrier in the second frequency band when it is determined to perform the carrier aggregation.

## FIG. 1

RADIO BASE STATION eNB

UE#A

UE#B

UE#C

CELL 2 (3.5 GHZ BAND)

CELL 1 (2 GHZ BAND)

EP 2 427 009 A1

# FIG. 2

RADIO BASE
STATION eNB

13

12

DECISION
UNIT

ACQUISITION
UNIT

14

CONTROL SIGNAL
TRANSMISSION
UNIT

DETERMINATION
UNIT

12A

BROADCAST
INFORMATION
TRANSMISSION
UNIT

11

# FIG. 3

MOBILE
STATION
UE

REPORTING
UNIT

MEASUREMENT
UNIT

PREDETERMINED
INFORMATION
RECEPTION UNIT

23

22

21

UPLINK SIGNAL
TRANSMISSION
UNIT

32

CONTROL
SIGNAL
RECEPTION
UNIT

DOWNLINK
SIGNAL
RECEPTION
UNIT

33

31

# FIG. 4

#1

UPLINK

2 GHz BAND

#2

UPLINK

3.5 GHz BAND   FREQUENCY

# FIG. 5

#1

DOWNLINK

2 GHz BAND

#2

DOWNLINK

3.5 GHz BAND   FREQUENCY

FIG. 6

```
                    ┌──────────┐
                    │  START   │
                    └──────────┘
                         │
                         │              S101
                         ▼
                    ╱────────────╲
                   ╱    RADIO      ╲        NO
                  ◁ QUALITY ≦THRESHOLD ▷──────────┐
                   ╲    VALUE?     ╱               │
                    ╲────────────╱                │
                         │ YES                     │
                         │                         │
              S102       │                S103     │
                         ▼                         ▼
         ┌────────────────────┐    ┌────────────────────┐
         │ REPORT RADIO        │    │ REPORT ONLY RADIO   │
         │ QUALITIES OF CELL 1 │    │ QUALITY OF CELL 1   │
         │ AND CELL 2          │    │                     │
         └────────────────────┘    └────────────────────┘
                         │                         │
                         │◄────────────────────────┘
                         ▼
                    ┌──────────┐
                    │   END    │
                    └──────────┘
```

# FIG. 7

MOBILE
STATION UE

RADIO BASE
STATION eNB

RA PREAMBLE

S1001

RA RESPONSE

S1002

SCHEDULED TRANSMISSION (MESSAGE 3)

S1003

CONTENTION RESOLUTION

S1004

UL-DCH (MESSAGE 5)

S1005

# FIG. 8

```
( START )
    │
    ▼
```

S201

RADIO QUALITY REPORTED FROM THE MOBILE STATION UE IS THE SAME AS RADIO QUALITY OF CARRIER IN 2 GHZ BAND?

— YES →

NO
↓

S202

RADIO QUALITY OF CARRIER IN 2 GHZ BAND IS EQUAL TO OR MORE THAN THRESHOLD VALUE A?

— YES →

NO
↓

S204

CARRIER AGGREGATION IS PERFORMED

↓

S205

RADIO QUALITY OF CARRIER IN 2 GHZ BAND IS EQUAL TO OR MORE THAN THRESHOLD VALUE B?

— YES →

NO
↓

S203

CARRIER AGGREGATION IS NOT PERFORMED. THAT IS, COMMUNICATION IS PERFORMED USING ONLY CARRIER IN 2 GHZ BAND

S206

SET CARRIER IN 2 GHZ BAND AS ANCHOR CARRIER

S207

SET CARRIER IN 3.5 GHZ BAND AS ANCHOR CARRIER

```
    ▼
( END )
```

<table>
<tr><td colspan="2">**INTERNATIONAL SEARCH REPORT**</td><td>International application No.<br>PCT/JP2010/057619</td></tr>
</table>

| A. CLASSIFICATION OF SUBJECT MATTER |
|---|
| *H04W72/04*(2009.01)i, *H04W16/30*(2009.01)i |

According to International Patent Classification (IPC) or to both national classification and IPC

| B. FIELDS SEARCHED |
|---|

Minimum documentation searched (classification system followed by classification symbols)
H04W72/04, H04W16/30

Documentation searched other than minimum documentation to the extent that such documents are included in the fields searched
Jitsuyo Shinan Koho     1922-1996    Jitsuyo Shinan Toroku Koho    1996-2010
Kokai Jitsuyo Shinan Koho   1971-2010    Toroku Jitsuyo Shinan Koho    1994-2010

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>A | Yuta SAGAE et al., "Performance Evaluation of a Spectrum Sharing Method with Joint Power Control and Spectrum Aggregation Techniques", IEICE Technical Report, 15 November 2009 (15.11.2009), vol.108, no.400, pages 15 to 20, ISSN 0913-5685 | 1,2,4-8<br>3 |

☐   Further documents are listed in the continuation of Box C.     ☐   See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>28 July, 2010 (28.07.10) | Date of mailing of the international search report<br>17 August, 2010 (17.08.10) |
|---|---|
| Name and mailing address of the ISA/<br>Japanese Patent Office | Authorized officer |
| Facsimile No. | Telephone No. |

Form PCT/ISA/210 (second sheet) (July 2009)